# EUROPÄISCHE PATENTSCHRIFT

(11) **EP 3 465 105 B1**
(45) Veröffentlichungstag und Bekanntmachung des Hinweises auf die Patenterteilung: **14.04.2021**
(21) Anmeldenummer: 17721161.2
(22) Anmeldetag: 04.05.2017
(51) Int. Cl.: G01F 23/00, G01F 23/02, G01F 23/292

(54) **ERMITTLUNG EINES FÜLLSTANDES BEI EINER HYDRODYNAMISCHEN KUPPLUNG**
DETERMINATION OF A FILLING LEVEL OF A HYDRODYNAMIC CLUTCH
DÉTERMINATION D'UN NIVEAU DE REMPLISSAGE D'UN ACCOUPLEMENT HYDRODYNAMIQUE

(30) Priorität: 03.06.2016 DE 102016209756
(43) Veröffentlichungstag der Anmeldung: 10.04.2019
(73) Patentinhaber: Voith Patent GmbH, 89522 Heidenheim (DE)
(72) Erfinder: BOEHNISCH, Herr Jürgen, 74589 Satteldorf (DE); FUCHS, Herr Marco, 74564 Crailsheim (DE); OHR, Herr Thomas, 74564 Crailsheim (DE)
(74) Vertreter: Voith Patent GmbH - Patentabteilung
(86) Internationale Anmeldenummer: PCT/EP2017/060649
(87) Internationale Veröffentlichungsnummer: WO 2017/207206

(56) Entgegenhaltungen:
- WO-A1-2010/080340
- DE-A1-102008 060 165
- DE-U1-202009 004 331
- US-A- 5 414 778
- US-A- 6 098 029
- US-A1- 2008 173 088

## Beschreibung

Die Erfindung betrifft ein Verfahren und eine Vorrichtung zur Ermittlung eines Füllstandes einer hydrodynamischen Kupplung.

Hydrodynamische Kupplungen, auch als Turbokupplung bezeichnet, sind zum Beispiel von der Firma Voith bekannt. Hydrodynamische Kupplungen enthalten zwei umlaufende Schaufelräder, die als Pumpenrad und Turbinenrad oder auch als Primärrad und Sekundärrad bezeichnet werden. Das Betriebsmedium strömt von dem Pumpenrad in das Turbinenrad und von dem Turbinenrad wieder zurück in das Pumpenrad. Die Menge und die Art der Betriebsflüssigkeit bestimmen im Wesentlichen das Verhalten der hydrodynamischen Kupplung. Eine zu große Füllmenge führt zu einer höheren Belastung des Antriebsmotors und der Arbeitsmaschine beim Anlauf sowie zu einem höheren Anfahrmoment. Eine zu geringe Füllmenge führt zu einer höheren thermischen Belastung der Kupplung sowie zu einem niedrigeren Anfahrmoment.

Bei hydrodynamischen Kupplungen werden insbesondere die konstant gefüllten hydrodynamischen Kupplungen vor Inbetriebnahme mit dem Betriebsmedium gefüllt. In der Regel werden die hydrodynamischen Kupplungen unbefüllt ausgeliefert. Vor der ersten Inbetriebnahme wird ein Befüllen der hydrodynamischen Kupplung durchgeführt. Es kann auch während des Betriebes ein Nachfüllen von Betriebsflüssigkeit erforderlich sein. Ein Nachfüllen kann insbesondere durch Leckagen erforderlich werden. Auch ein Austausch des Betriebsmediums kann regelmäßig vorgesehen sein sowie eine Wiederbefüllung nach thermischer Belastung.

Es ist zum Beispiel in der Einbau- und Betriebsanleitung der Firma Voith für Turbokupplungen mit konstanter Füllung beschrieben, dass die Kupplung gedreht wird, bis sich die Einfüllschraube der hydrodynamischen Kupplung ganz oben befindet. Umfasst die Kupplung mehrere Einfüllschrauben, ist die Einfüllschraube oben zu positionieren, die der Sichtschraube am nächsten liegt. Die Einfüllschraube wird herausgedreht. Anschließend wird für einen Druckausgleich eine weitere obere Öffnung geöffnet, z.B. eine oben sich befindende Schmelzsicherungsschraube herausgedreht. Danach wird eine vorgeschriebene Menge an Betriebsflüssigkeit, z.B. Wasser oder Öl über die Einfüllschraubenöffnung eingefüllt. Anschließend werden die Öffnungen, Einfüllöffnung und Schmelzsicherungsschraube, verschlossen. Anschließend wird die Kupplung gedreht, bis die Betriebsflüssigkeit an einer vorgesehenen Sichtschraube sichtbar ist. Die Anzahl der Flanschschrauben von der Sichtschraube bis zur vertikalen Achse wird ermittelt. Die erste Schraube ist diejenige, deren Mittellinie in Zählrichtung nach der Schnittlinie durch die Sichtschraube liegt. Für spätere Füllstandskontrollen wird die ermittelte Anzahl notiert.

Es ist auch möglich, dass bei einer Befüllung ein Höhenmaß oder Winkelmaß des Sichtfensters als Referenzwert notiert wird und anschließend diese Maße für eine Wiederbefüllung herangezogen werden.

Bei einer Füllstandskontrolle wird die Kupplung gedreht, bis die Betriebsflüssigkeit an der Sichtschraube gerade sichtbar ist. Die Anzahl der Flanschschrauben von der Sichtschraube bis zur vertikalen Achse wird ermittelt. Die Anzahl der ermittelten Schrauben wird mit der Angabe in der Betriebsanleitung oder mit der nach der ersten Befüllung ermittelten Maße verglichen. Bei einer Abweichung ist die Füllmenge zu korrigieren.

Anstelle der Methode mit der Anzahl der Schrauben kann auch eine entsprechende Position an der Kupplung oder an der Hausung markiert sein und diese als Referenzposition verwendet werden. Ist bei eingenommener Positionierung der Kupplung die Betriebsflüssigkeit im Sichtfenster nicht hälftig sichtbar, so ist die Füllmenge zu korrigieren.

Aus der DE 10 2008 060 165 A1 ist ein Nachlaufspeicher für eine hydraulische Betätigungseinrichtung für eine Kupplungs- oder Bremsbetätigung bekannt. In den Nachlaufspeicher ist Hydraulikflüssigkeit gespeichert, so dass bei einem Schwund an Hydraulikflüssigkeit die Hydraulikflüssigkeit in die Betätigungseinrichtung nachlaufen kann. Für eine Überprüfung des Füllstandes in dem Nachlaufspeicher ist ein Sichtfenster vorgesehen. Zur Vermeidung eines Einsaugens von Luftblasen ist eine Abtrenneinheit vorgesehen. Durch die Abtrenneinheit als Blasenführungsfläche wird der Nachlaufspeicher in eine Vorhaltekammer und eine Ansaugkammer unterteilt.

Aus der WO 2010/080340 A1 ist eine Vorrichtung und ein Verfahren zur Bestimmung einer Füllhöhe in einem Container anhand von Lichtintensitäten bekannt. Der Container wird mit Licht durchstrahlt und die in dem Behälter befindliche Flüssigkeit absorbiert Licht. Dabei wird für die Bestimmung ein zweidimensionales Feld von Lichtintensitäten aufgenommen.

Aus der US 6,098,029 ist es bekannt, eine Aufnahme von einer Flüssigkeitsfläche für die Bestimmung eines Füllstandes heranzuziehen.

Der Erfindung liegt die Aufgabe zugrunde, ein Verfahren bereitzustellen, mit dem ein Befüllen einer hydrodynamischen Kupplung vereinfacht wird. Weiterhin liegt der Erfindung die Aufgabe zu Grund die Befüllung einfach kontrollieren zu können.

Die erfindungsgemäße Lösung ist durch die Merkmale der unabhängigen Ansprüche charakterisiert. Vorteilhafte Ausgestaltungen sind in den Unteransprüchen wiedergegeben.

Durch die Maßnahme eine Vorrichtung mit einem mobilen Gerät mit einer Kamera zu verwenden wird eine Vorrichtung bereitgestellt, mit der ein Befüllen einer hydrodynamischen Kupplung vereinfacht wird. Mittels der Kamera und der Bilderkennung ist die Erfassung eines Sichtfensters der hydrodynamischen Kupplung möglich. Das mobile Gerät ist mit einem Modul zur Bestimmung der Position des Sichtfensters versehen. Damit kann die Position des Sichtfensters, insbesondere auch bei hälftig sichtbarem Füllstand, aufgenommen werden. Weiterhin ist es möglich das Sichtfenster auf eine vorbestimmte Position zu positionieren. Dafür kann z.B. eine Markierung an der Kupplung vorgesehen sein oder bei bekannter vorbestimmter Sollposition eine Positionierung auf diese Position vorgesehen sein.

Die hydrodynamische Kupplung ist von einem Gehäuse umgeben und das Sichtfenster kann dadurch schwer zugänglich sein. Mittels des mobilen Gerätes kann durch die Kamera und der Bilderkennung eine Aufnahme der Position des Sichtfensters erfolgen, in dem das mobile Gerät mit der Kamera zur Aufnahme der hydrodynamischen Kupplung genutzt wird. Mittels des Moduls zur Bestimmung der Position des Sichtfensters wird dann anschließend die Position des Sichtfensters bestimmt . Basierend auf der bestimmten Position des Sichtfensters können dann weitere Maßnahmen vorgesehen werden.

In einem bevorzugten Ausführungsbeispiel ist das mobile Gerät mit einem Gravitationssensor versehen, so dass das aufgenommene Bild in Bezug auf die erfasste Richtung der wirkenden Gravitationskraft ausgerichtet werden kann. Eine genaue Positionierung des mobilen Gerätes bei der Bildaufnahme ist damit nicht erforderlich. Damit kann auch eine Ausrichtung des aufgenommenen Bildes erfolgen, wenn kein Flüssigkeitsstand im Sichtfenster sichtbar ist. Außerdem kann bei kleinem Sichtfenster anhand des Flüssigkeitsstandes nur ungenau die Richtung der wirkenden Gravitationskraft bestimmt werden. Mittels eines Gravitationssensors kann unabhängig von der Position des Sichtfensters die Ausrichtung des aufgenommenen Bildes immer durchgeführt werden.

Es ist vorgesehen, dass die Bilderkennung eine Außenkontur des Gehäuses erfasst. In dem Modul zur Bestimmung der Position des Sichtfensters wird die Außenkontur bei der Positionsbestimmung des Sichtfensters herangezogen . Außerdem kann vorgesehen sein, anhand der Außenkontur auf den Typ/ Modell der Kupplung zu schließen. Insbesondere bei einer Winkelposition des Sichtfensters kann die Außenkontur hilfreich sein. Bei den hydrodynamischen Kupplungen ist die Kontur bei Schnitt senkrecht zur Rotationsachse rotationssymmetrisch. Anhand der Tangente der Außenkontur kann eine Winkelposition des Sichtfensters in Bezug auf die Vertikale, die der Richtung der wirkenden Gravitationskraft entspricht, vorgenommen werden.

In einer bevorzugten Ausführungsform ist vorgesehen, dass der Vorrichtung ein Datenspeicher zugeordnet ist. Der Datenspeicher kann in dem mobilen Gerät selbst vorgesehen sein, oder es kann vorgesehen sein, dass das mobile Gerät auf einen externen Datenspeicher zugreift. Bei dem externen Datenspeicher kann es sich um einen zentralen Datenspeicher, z.B. des Kupplungsherstellers handeln, in dem die Daten der verschiedenen Kupplungstypen hinterlegt sind. Es kann sich aber auch um einen externen an der Kupplung selbst angeordneten Datenspeicher handeln. So kann an der Kupplung ein Datenspeicher vorgesehen sein, in dem die Daten der Kupplung, wie insbesondere Sollfüllmenge und Sollposition des Sichtfensters mit hälftig sichtbarem Flüssigkeitsstand bei Befüllung mit der Sollfüllmenge hinterlegt ist. Bei einem an der Kupplung selbst angeordneten Datenspeicher kann es sich um einen nur lesbaren oder um einen lesbaren und beschreibbaren Datenspeicher handeln. Ist der Datenspeicher beschreibbar, so kann die Position des Sichtfensters mit hälftig sichtbarem Füllstand mit der Sollfüllmenge nach Inbetriebnahme dort abgelegt werden. Auch können in dem Datenspeicher Serviceintervalle hinterlegt werden.

In einer bevorzugten Ausführungsform ist vorgesehen, dass das mobile Gerät ein Display aufweist. Dadurch kann die bestimmte Position des Sichtfensters und/oder auch eine vorbestimmte Sollposition in Bezug auf die derzeitige IstPosition dem Nutzer optisch angezeigt werden. Es kann auch vorgesehen sein, dass das Display auch als Eingabeeinheit des mobilen Gerätes nutzbar ist. Derartige Display werden als Touchscreen bezeichnet. Weiterhin kann ein akustischer Signalgeber als Ausgabeeinrichtung vorgesehen sein. Der akustische Signalgeber kann alternativ oder zusätzlich zu dem optischen Signalgeber vorgesehen sein. Durch den akustischen Signalgeber können dem Nutzer akustische Signale, z.B. zur Positionierung des Sichtfensters auf der Sollposition vorgesehen sein. So können dem Nutzer einfach akustische Anweisungen übermittelt werden, insbesondere auch dann wenn in diesem Moment dem Nutzer ein Display, z.B. verdeckt durch ein Gehäuse, nicht zugänglich ist.

In einer bevorzugten Ausführungsform ist vorgesehen, dass mobile Gerät eine Datenübertragungseinrichtung zum Senden und Empfangen von elektronischen Daten umfasst. Mittels dieser Datenübertragungseinrichtung, die drahtlos ausgeführt sein kann, ist es möglich Daten zu dem vorliegenden Kupplungstyp von externen Datenspeichern auszulesen. Weiterhin ist es möglich, auch Informationen nach der ersten Inbetriebnahme und zu vorgenommenen Servicevorgängen in externen Speichern abzulegen. Auch können Triggersignale versendet werden. Ist zum Beispiel eine externe Pumpe zum Befüllen der hydrodynamischen Kupplung an diese Kupplung angeschlossen, so kann ein Triggersignal an die Pumpe durch das mobile Gerät versendet werden, wenn ein vorbestimmter Sollfüllstand erfasst wird. Ein weiteres Befüllen der Kupplung kann automatisiert gestoppt werden.

Das erfindungsgemäße Verfahren macht ein komfortables Füllen einer konstant gefüllten hydrodynamischen Kupplung bei Inbetriebnahme und/oder eine Überprüfung oder Einstellung eines Füllstandes unter Verwendung einer Vorrichtung nach einem der vorhergehenden Ansprüche möglich. Bei dem Verfahren wird durch eine Bilderkennung die Position des Sichtfensters bei hälftig sichtbarem Füllstand erfasst. Weiterhin wird durch die Bilderkennung eine Erkennung der Außenkontur des Gehäuses der hydrodynamischen Kupplung durchführt. Dabei ist das Sichtfenster in dem zur Erfassung der Außenkontur herangezogenen Bildausschnitt enthalten ist. Bei Inbetriebnahme kann so bei eingefüllter Sollmenge an Betriebsflüssigkeit in komfortabler Weise die Position des Sichtfensters bei hälftig sichtbarem Füllstand erfasst werden. Auch kann in komfortabler Weise nach Inbetriebnahme durch Bestimmung der Position des Sichtfensters bei hälftig sichtbarem Füllstand ermittelt werden, ob die Kupplung ausreichen mit Betriebsflüssigkeit befüllt ist.

Ein einem bevorzugten Verfahren ist vorgesehen, die Außenkontur des Gehäuses der Kupplung zu der wirkenden Gravitationskraft in Bezug zu setzen. Dadurch kann eine Winkelposition des Sichtfensters bestimmt werden. Bei einer bevorzugten Ausführungsform wird die Tangente an der Außenkontur und die Normale zu der Tangente, die das Sichtfenster mittig schneidet bestimmt und dann der Winkel zwischen der Richtung der wirkenden Gravitationskraft und der Normalen bestimmt.

Bei einem bevorzugten Verfahren zum Ermitteln eines Füllstandes ist vorgesehen, den Kupplungstyp zu bestimmen. Die Bestimmung des Kupplungstypes kann zum Beispiel durch Auslesen eines Typenschildes oder durch Auslesen eines vorgesehenen Datenspeichers oder auch durch die Erfassung der Außenkontur und nachfolgendem Abgleich der verschiedenen Kupplungstypen in der Datenbank erfolgen. Weiterhin ist vorgesehen, das Sichtfenster bei hälftig sichtbarem Füllstand optisch zu erfassen. Die Erfassung kann durch ein mobiles Gerät mit Kamerafunktion erfolgen. Anschließend werden die optischen Daten ausgewertet die Position des Sichtfensters anhand dessen bestimmt. Von der Position des Sichtfensters wird die Ist-Füllmenge der hydrodynamischen Kupplung abgeleitet. Die Ist-Füllmenge wird mit einer vorbestimmten Sollfüllmenge abgeglichen und es wird eine Nachfüllmenge oder Entleermenge ausgegeben.

In einer bevorzugten Ausführungsform ist vorgesehen das Verfahren zur Einstellung eines vorbestimmten Füllstandes zu Nutzen. In dieser Ausführungsform wird der Kupplungstyp bestimmt. Der Kupplungstyp kann eingegeben werden oder auch automatisiert ausgelesen werden oder auch anhand der optischen Erscheinung der Kupplung bestimmt werden. Das Sichtfenster wird auf eine vorbestimmte Position unter Verwendung einer Bilderkennung positioniert. Dabei kann vorgesehen sein, dass Signale ausgegeben werden, durch die der Nutzer zur Einstellung des Sichtfensters auf die vorbestimmte Position unterstützt wird. Bei eingenommener Sollposition wird Betriebsflüssigkeit nachgefüllt bis im Sichtfenster ein Füllstand hälftig erkennbar ist. Auch dieser Vorgang kann durch die optische Bilderkennung unterstützt werden.

Eine Ausgestaltung des Verfahrens besteht darin, dass bei Bestimmung der Position des Sichtfensters die Winkelposition des Winkels (α) zwischen der Vertikalen und der Normalen zur Tangente der Außenkontur bestimmt wird, wobei die Normale das Sichtfenster mittig schneidet und die Tangente im Schnittpunkt der Tangente mit der Außenkontur des Gehäuses im rechten Winkel schneidet. Dadurch ist es nicht erforderlich, die Rotationsachse bzw. die Mitte der Kupplung zu bestimmen. Es genügt nur ein Bildausschnitt, auf dem das Sichtfenster und die Außenkontur sichtbar sind, aufzunehmen. Durch Wahl eines kleineren Bildausschnittes kann die Genauigkeit erhöht werden.

Eine Ausgestaltung des Verfahrens besteht darin, dass bei erkanntem erreichtem hälftigen Füllstand oder eingenommener Sollposition des Sichtfensters ein Triggersignal ausgesendet wird. So kann dem Nutzer das Erreichen der Sollposition oder das Erreichen einer Position des Sichtfensters bei hälftig sichtbarem Füllstand, auch wenn das Sichtfenster für den Nutzer nicht einsehbar ist, signalisiert werden. Das ist insbesondere bei schwer zugänglichen Kupplungen sehr hilfreich.

Es kann zur Befestigung des mobilen Gerätes eine Halterung vorgesehen sein. Durch die Halterung ist das mobile Gerät fest mit der Kupplung verbunden und wird mit dem Kupplungsgehäuse mitgedreht. Es kann ein Bild von dem Sichtfenster durch das mobile Gerät aufgenommen werden. Zum einen können die Aufnahmen des Sichtfensters fortwährend übertragen werden, z.B. an ein Display, oder es kann das Erreichen eines hälftigen Füllstandes übertragen und/oder signalisiert werden. Beispielsweise kann durch ein akustisches Signal eine Annäherung an eine vorbestimmte Sollposition, wie hälftiger Füllstand im Sichtfenster, signalisiert werden. Bei eingenommener Sollposition kann daraus eine Ermittlung der Winkelposition des Sichtfensters oder des Füllstandes vorgesehen sein. Anhand dieser Informationen kann eine Nachfüllmenge oder Ablassmenge, auch als Korrekturfüllmenge bezeichnet, übermittelt werden. Zum Beispiel kann eine Korrekturfüllmenge auf dem Display angezeigt werden oder mittels eines Lautsprechers angesagt werden. Auch kann vorgesehen sein, dass die ermittelte Korrekturfüllmenge direkt an eine an die Kupplung angeschlossene Befülleinheit übertragen wird und eine Befüllung bzw. eine Korrektur der Befüllung automatisiert erfolgt.

Die erfindungsgemäße Lösung wird nachfolgend anhand einer Figur erläutert. Darin ist im Einzelnen folgendes dargestellt:

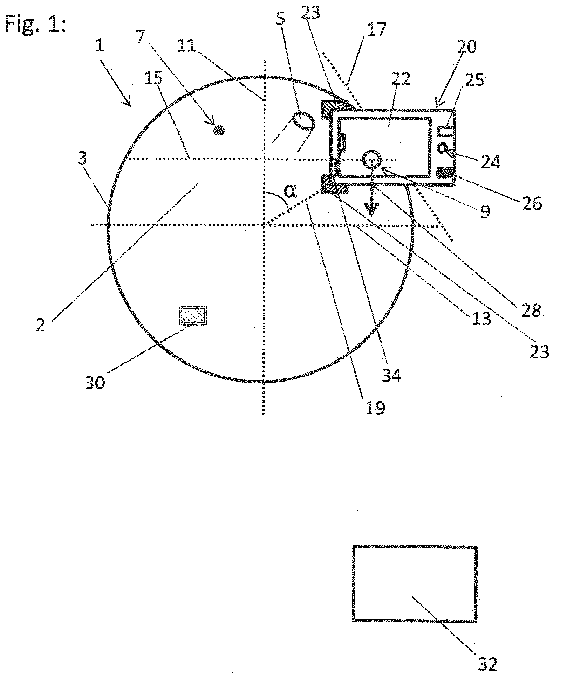

Figur 1 Schematische Darstellung der hydrodynamischen Kupplung

Figur 1 zeigt schematisch ein hydrodynamische Kupplung 1. Die hydrodynamische Kupplung hat eine rotationssymmetrische Außenkontur 3. In dieser Darstellung verläuft die Rotationsachse durch den Mittelpunkt des durch die Außenkontur 3 begrenzten Gehäuses. In diesem Mittelpunkt schneidet sich eine vertikale Achse 11 (12 Uhr Position), mit einer horizontalen Achse 13. Die hydrodynamische Kupplung weist eine Einfüllöffnung 5 und ein Sichtfenster 9 auf. Eine weitere Öffnung 7, die geöffnet werden kann, kann eine vorgesehene Schmelzsicherungsschraube sein. Diese weitere Öffnung 7 kann bei einem Befüllen der Kupplung 1 geöffnet werden, um das Einfüllen durch die Einfüllöffnung zu erleichtern. Der Füllstand ist mit einer gestrichelten Linie 15 dargestellt. Unterhalb dieser gestrichelten Füllstandslinie 15 ist die Kupplung 1 mit Betriebsflüssigkeit 2 gefüllt. An der Außenkontur 3 ist eine Tangente 17 eingezeichnet, wobei eine Normale 19 zu dieser Tangente 17 das Sichtfenster 9 mittig schneidet. Die Normale 19 schneidet die Tangente 17 im rechten Winkel. Das Gehäuse ist mit einem Typenschild in Form von einem RFID Chip versehen, in dem die technischen Daten der Kupplung hinterlegt sind. Damit ist es nicht mehr erforderlich, Handbücher oder Datenblätter in Papierform vorzuhalten. Das ist insbesondere auch dann vorteilhaft, wenn mehrere derartige hydrodynamische Kupplungen in einer Anordnung oder einer Halle angeordnet sind. Ein Auffinden der korrekten Information ist dann nicht mehr erforderlich. Die Kupplungsinformation kann auch auf einem in dem Gehäuse eingegossenen Datenspeicher insbesondere mit Sende- und ggf. Empfangseinheit, vorgesehen sein.

Es ist ein mobiles Gerät 20 gezeigt, dass eine Kamera 24 aufweist. Der von der Kamera aufgenommene Bildausschnitt 21 kann auf einem Display 22 des mobilen Gerätes 20 dargestellt werden. Das Sichtfenster 9 ist in dem Display 22 gezeigt. Der Winkel, den das Sichtfenster 9 mit der Vertikalen 11 einschließt ist mit α gekennzeichnet. In dem mobilen Gerät 20 ist ein Gravitationssensor 26 vorgesehen und die wirkende Gravitationskraft ist als Pfeil 28 dargestellt. Weiterhin umfasst das mobile Gerät 20 ein Modul 25 zu Bestimmung der Position des Sichtfensters 9. Das mobile Gerät umfasst eine Ausgabeeinrichtung 23 in Form eines Lautsprechers. Auch das Display 22 stellt eine Ausgabeeinrichtung dar. Das mobile Gerät 20 ist mit einer Datenübertragungseinrichtung 34 mit einer Empfangs- und Sendeeinrichtung zur drahtlosen Übertragung von Daten und Triggersignalen und zum Empfangen von Daten versehen.

Mit dem mobilen Gerät 20 kann eine Soll-Füllmenge über eine NFC-Funktion des mobilen Gerätes 20 bei einem vorgesehenen Datenspeicher an der Kupplung 1 durch ein Auslesen des Datenspeichers erlangt werden. Dabei kann der Datenspeicher in das Typenschild 30 integriert sein und/oder ein QR-Code kann als Datenspeicher vorgesehen sein, der durch die Kamera 24 ausgelesen werden kann.

Es kann auch durch das mobile Gerät 20 ein Zugriff auf einen externen Datenspeicher 32, wie einer Cloud oder einem externen Server, vorgesehen sein. Die Ist-Füllung wird durch Einsatz der Kamera 24 und des Gravitationssensors 26 des mobilen Gerätes 20 bewerkstelligt. Hierzu kann vorgesehen sein, in einem ersten Schritt die Kupplungsgröße und -typ durch eine optische Erfassung der Kupplung 1 mittels der Kamera 24 zu ermitteln. Alternativ kann Kupplungsgröße und -typ auch als Datensatz über NFC- oder QR-Code-Scan bzw. über manuelle Eingabe erfolgen.

In einem zweiten Schritt wird die Ist-Füllung an Betriebsflüssigkeit ermittelt. Hierzu wird nach erfolgter Kupplungsausrichtung, so dass der Füllstand hinter dem Sichtfenster sichtbar ist, über die Kamera 24 ein Bild der Kupplung 1 aufgenommen. Durch Ermittlung der Tangente 17 der Kupplungsaußenkontur 3 und der dazugehörigen Normalen 19 durch das Sichtfenster wird in Verbindung mit der durch den Gravitationssensor 26 ermittelten vertikale Achse 11 der die Winkelposition des Sichtfensters 9 bestimmt. Alternative zur Verwendung eines Gravitationssensors 26 kann auch die Ausrichtung der Füllstandslinie15 herangezogen werden, um eine Horizontale und Vertikale und damit den Winkel zur Vertikalen zu bestimmen. Die Füllmenge kann durch einen Algorithmus unter Berücksichtigung der Winkelposition und der Kupplungsgröße bzw. Kupplungstyps errechnet werden.

Für Kupplungen, bei welchen das Sichtfenster 9 z.B. durch Hausungen nicht einsehbar ist, kann eine Funktionalität des mobilen Gerätes 20 darin bestehen, das Sichtfenster 9 mit hälftig sichtbarem Betriebsmittel bei Drehung der Kupplung 1 zu erkennen und zu signalisieren, so dass der Nutzer des mobilen Gerätes 20 informiert wird, dass nun das Sichtfenster 9 einer vorgesehenen Positionierung entspricht. Das mobile Gerät 20 kann durch eine an der Kupplung 1 vorgesehene Halterung 23 an der Kupplung 1 befestigt werden und ein Bild von dem Sichtfenster 9 mittels der Kamera 24 aufnehmen. Das aufgenommene Bild wird an ein Display 22 übertragen und der Nutzer erhält direkt die Bilder von dem Sichtfenster 9 und dadurch selbst einen im Sichtfenster 9 hälftigen Füllstand erkennen. Es kann für eine exakte Positionierung auf diese Position eine Signalgebung, z.B. durch Angabe eines Drehwinkels oder eines akustischen Signals, der eine exakte Positionierung auf die Sollposition begleitet, vorgesehen sein.

### Bezugszeichenliste:

- 1: hydrodynamische Kupplung
- 2: Betriebsflüssigkeit
- 3: Außenkonturder Kupplung
- 5: Einfüllöffnung
- 7: weitere Öffnung, Öffnung für Schmelzsicherungsschraube
- 9: Sichtfenster
- 11: vertikale Achse
- 13: horizontale Achse
- 15: Füllstand
- 17: Tangente an der Außenkontur
- 19: Normale zur Tangente
- 20: mobiles Gerät
- 21: Bildausschnitt
- 22: Ausgabeeinheit/Display
- 23: Halterung
- 24: Kamera
- 25: Modul
- 26: Gravitationssensor
- 28: Gravitationskraft
- 30: Typenschild
- 32: Datenspeicher
- 34: Datenübertragungseinrichtung

## Patentansprüche

1. Vorrichtung ausgeführt zur Ermittlung eines Füllstandes einer Betriebsflüssigkeit einer hydrodynamischen Kupplung (1) die hydrodynamische Kupplung umfassend ein Sichtfenster,
**dadurch gekennzeichnet,**
**dass** die Vorrichtung ein mobiles Gerät (20) umfasst, wobei das mobile Gerät (20) mit einer Kamera (24) zur optischen Erfassung der hydrodynamischen Kupplung (1) und mit einer Bilderkennung zur Erfassung eines Sichtfensters (9) und der Außenkontur des Gehäuses der hydrodynamischen Kupplung (1) und mit einem Modul (25) zur Bestimmung der Position des Sichtfensters (9) versehen ist, wobei in dem Modul (25) die Außenkontur bei der Positionsbestimmung des Sichtfensters herangezogen wird.

2. Vorrichtung nach Anspruch 1,
**dadurch gekennzeichnet,**
**dass** das mobile Gerät (20) einen Gravitations-Sensor (26) zur Ausrichtung des aufgenommenen Bildes in Bezug auf die wirkende Gravitationskraft umfasst, wobei die wirkende Gravitationskraft der Vertikalen entspricht.

3. Vorrichtung nach einem der vorhergehenden Ansprüche,
**gekennzeichnet dadurch,**
**dass** der Vorrichtung ein Datenspeicher (32) zur Hinterlegung von Sollpositionen des Sichtfensters (9) und/oder von Füllmengen in Abhängigkeit von Positionen des Sichtfensters (9) bei hälftig sichtbarem Füllstand (15) in Bezug auf verschiedene Kupplungstypen zugeordnet ist.

4. Vorrichtung nach einem der vorhergehenden Ansprüche,
**gekennzeichnet dadurch,**
**dass** das mobile Gerät (20) ein Display (22) aufweist.

5. Vorrichtung nach einem der vorhergehenden Ansprüche,
**gekennzeichnet dadurch,**
**dass** das mobile Gerät (20) eine Ausgabeeinrichtung (23), wie ein akustischer Signalgeber und/oder optischer Signalgeber, umfasst.

6. Vorrichtung nach einem der vorhergehenden Ansprüche,
**gekennzeichnet dadurch,**
**dass** das mobile Gerät (20) eine Datenübertragungseinrichtung (34) zum Senden und Empfangen von elektronischen Daten umfasst.

7. Vorrichtung nach einem der vorhergehenden Ansprüche,
**gekennzeichnet dadurch,**
**dass** die Kupplung eine Halterung (23) zur Aufnahme des mobilen Gerätes (20) aufweist.

8. Verfahren zur Ermittlung eines Füllstandes einer Betriebsflüssigkeit einer hydrodynamischen Kupplung unter Verwendung einer Vorrichtung nach einem der vorhergehenden Ansprüche,
**dadurch gekennzeichnet,**
**dass** eine Bilderkennung die Position des Sichtfensters (9) bei hälftig sichtbarem Füllstand (15) erfasst, und die Bilderkennung eine Erkennung der Außenkontur (3) des Gehäuses der hydrodynamischen Kupplung (1) durchführt, wobei das Sichtfenster (9) in dem zur Erfassung der Außenkontur (3) herangezogenen Bildausschnitt (21) enthalten ist und eine Bestimmung einer Winkelposition des Sichtfenster in Bezug auf die Vertikale vorgenommen wird.

9. Verfahren nach Anspruch 8,
**dadurch gekennzeichnet,**
**dass** die erfasste Außenkontur (3) zur wirkenden Gravitationskraft (28) in Bezug gesetzt wird.

10. Verfahren nach Anspruch 8
**gekennzeichnet durch folgende Verfahrensschritte**
• Bestimmen des Kupplungstypen
• optische Erfassung des Sichtfensters (9) bei hälftig sichtbarem Füllstand (15)
• Bestimmung der Position des Sichtfensters (9)
• Ermitteln der Ist-Füllmenge der hydrodynamischen Kupplung anhand der Position des Sichtfensters
• Abgleich mit der vorbestimmten Sollfüllmenge
• Ausgabe einer Nachfüllmenge oder Ablassmenge.

11. Verfahren nach Anspruch 8,
**gekennzeichnet durch folgende Verfahrensschritte**
• Bestimmen des Kupplungstypen
• Positionierung des Sichtfensters (9) auf eine vorbestimmte Position unter Verwendung einer Bilderkennung
• Nachfüllen von Betriebsflüssigkeit bis im Sichtfenster ein Füllstand hälftig erkennbar ist.

12. Verfahren nach einem der Ansprüche 8 bis 11,
**dadurch gekennzeichnet,**
**dass** bei Bestimmung der Position des Sichtfensters die Winkelposition des Winkels (a) zwischen der Vertikalen und der Normalen zur Tangente der Außenkontur bestimmt wird, wobei die Normale das Sichtfenster mittig schneidet und die Tangente im Schnittpunkt der Tangente mit der Außenkontur des Gehäuses im rechten Winkel schneidet.

13. Verfahren nach einem der Ansprüche 8 bis 12
**dadurch gekennzeichnet,**
**dass** bei erkanntem erreichtem hälftigen Füllstand (15) oder eingenommener Sollposition des Sichtfensters (9) ein Triggersignal ausgesendet wird.

## Claims

1. Device designed for determining a fill level of an operating fluid of a hydrodynamic coupling (1), the hydrodynamic coupling comprising an inspection window,
**characterized**
**in that** the device comprises a mobile device (20), wherein the mobile device (20) is provided with a camera (24) for the optical detection of the hydrodynamic coupling (1) and with image recognition for detecting an inspection window (9) and the outer contour of the housing of the hydrodynamic coupling (1) and with a module (25) for determining the position of the inspection window (9), wherein, in the module (25), the outer contour is used when determining the position of the inspection window.

2. Device according to Claim 1,
**characterized**
**in that** the mobile device (20) comprises a gravitational sensor (26) for aligning the recorded image with respect to the effective gravitational force, wherein the effective gravitational force corresponds to the vertical.

3. Device according to one of the preceding claims,
**characterized**
**in that** a data memory (32) is assigned to the device for storing desired positions of the inspection window (9) and/or fill quantities on the basis of positions of the inspection window (9) for a half visible fill level (15) with respect to various coupling types.

4. Device according to one of the preceding claims,
**characterized**
**in that** the mobile device (20) comprises a display (22) .

5. Device according to one of the preceding claims,
**characterized**
**in that** the mobile device (20) comprises an output device (23), such as an acoustic signalling device and/or optical signalling device.

6. Device according to one of the preceding claims,
**characterized**
**in that** the mobile device (20) comprises a data transmission device (34) for sending and receiving electronic data.

7. Device according to one of the preceding claims,
**characterized**
**in that** the coupling has a holder (23) for mounting the mobile device (20).

8. Method for determining a fill level of an operating fluid of a hydrodynamic coupling using a device according to one of the preceding claims,
**characterized**
**in that** image recognition detects the position of the inspection window (9) with half visible fill level (15) and the image recognition carries out a recognition of the outer contour (3) of the housing of the hydrodynamic coupling (1), wherein the inspection window (9) is contained in the image section (21) used for detecting the outer contour (3) and a determination of an angular position of the inspection window with respect to the vertical is performed.

9. Method according to Claim 8,
**characterized**
**in that** the detected outer contour (3) is set in relation to the effective gravitational force (28).

10. Method according to Claim 8,
**characterized by** the following method steps
• determining the coupling type
• optical detection of the inspection window (9) with half visible fill level (15)
• determining the position of the inspection window (9)
• determining the actual fill quantity of the hydrodynamic coupling on the basis of the position of the inspection window
• comparison with the predetermined desired fill quantity
• output of a refill quantity or drainage quantity.

11. Method according to Claim 8,
**characterized by** the following method steps
• determining the coupling type
• positioning the inspection window (9) at a predetermined position using image recognition
• refilling operating fluid until a fill level is half recognizable in the inspection window.

12. Method according to one of Claims 8 to 11,
**characterized**
**in that** the angular position of the angle (α) between the vertical and the normal to the tangent of the outer contour is determined during the determination of the position of the inspection window, wherein the normal intersects the inspection window centrally and intersects the tangent at right angles at the point of intersection of the tangent with the outer contour of the housing.

13. Method according to one of Claims 8 to 12,
**characterized**
**in that** a trigger signal is sent out when it is known that the half fill level (15) has been reached or the desired position of the inspection window (9) has been assumed.

## Revendications

1. Arrangement, réalisé pour déterminer un niveau d'un fluide de service d'un accouplement hydrodynamique (1), l'accouplement hydrodynamique comprenant une fenêtre d'inspection,
**caractérisé en ce que**
l'arrangement comporte un appareil mobile (20), l'appareil mobile (20) étant pourvu d'une caméra (24) destinée à la capture optique de l'accouplement hydrodynamique (1) et d'un élément de reconnaissance d'image destiné à capturer une fenêtre d'inspection (9) et le contour extérieur du boîtier de l'accouplement hydrodynamique (1) ainsi que d'un module (25) destiné à déterminer la position de la fenêtre d'inspection (9), le contour extérieur étant utilisé dans le module (25) lors de la détermination de la position de la fenêtre d'inspection.

2. Arrangement selon la revendication 1, **caractérisé en ce que** l'appareil mobile (20) comporte un capteur gravitationnel (26) destiné à orienter l'image enregistrée en référence à la force gravitationnelle agissante, la force gravitationnelle agissante correspondant à la verticale.

3. Arrangement selon l'une des revendications précédentes, **caractérisé en ce qu'**une mémoire de données (32) destinée à stocker des positions de consigne de la fenêtre d'observation (9) et/ou des volumes de remplissage en fonction des positions de la fenêtre d'observation (9) avec un niveau (15) visible à moitié est associée à l'arrangement en référence à différents types d'accouplement.

4. Arrangement selon l'une des revendications précédentes, **caractérisé en ce que** l'appareil mobile (20) possède un afficheur (22).

5. Arrangement selon l'une des revendications précédentes, **caractérisé en ce que** l'appareil mobile (20) possède un dispositif de sortie (23), tel qu'un transmetteur de signal sonore et/ou un transmetteur de signal visuel.

6. Arrangement selon l'une des revendications précédentes, **caractérisé en ce que** l'appareil mobile (20) comporte un dispositif de transmission de données (34) destiné à émettre et à recevoir des données électroniques.

7. Arrangement selon l'une des revendications précédentes, **caractérisé en ce que** l'accouplement possède un élément de maintien (23) destiné à accueillir l'appareil mobile (20).

8. Procédé pour déterminer un niveau d'un fluide de service d'un accouplement hydrodynamique en utilisant un arrangement selon l'une des revendications précédentes, **caractérisé en ce que**
un élément de reconnaissance d'image capture la position d'une fenêtre d'inspection (9) avec le niveau (15) visible à moitié, et l'élément de reconnaissance d'image effectue une reconnaissance du contour extérieur (3) du boîtier de l'accouplement hydrodynamique (1), la fenêtre d'inspection (9) étant incluse dans la portion d'image (21) utilisée pour la capture du contour extérieur (3) et une détermination d'une position angulaire de la fenêtre d'inspection en référence à la verticale étant effectuée.

9. Procédé selon la revendication 8, **caractérisé en ce que** le contour extérieur (3) capturé est mis en référence avec la force gravitationnelle (28) agissante.

10. Procédé selon la revendication 8, **caractérisé par** les étapes suivantes :
• détermination du type d'accouplement
• capture optique de la fenêtre d'inspection (9) avec le niveau (15) visible à moitié
• détermination de la position de la fenêtre d'inspection (9)
• identification du volume de remplissage réel de l'accouplement hydrodynamique à l'aide de la position de la fenêtre d'inspection
• comparaison avec le volume de remplissage de consigne
• délivrance en sortie d'un volume d'appoint ou d'un volume à évacuer.

11. Procédé selon la revendication 8, **caractérisé par** les étapes suivantes :
• détermination du type d'accouplement
• positionnement de la fenêtre d'inspection (9) à une position prédéterminée en utilisant une reconnaissance d'image
• recharge en liquide de service jusqu'à ce qu'un niveau soit à moitié reconnaissable dans la fenêtre d'inspection.

12. Procédé selon l'une des revendications 8 à 11, **caractérisé en ce que** lors de la détermination de la position de la fenêtre d'inspection, la position angulaire de l'angle (a) entre la verticale et la normale à la tangente du contour extérieur est déterminée, la normale croisant la fenêtre d'inspection au centre et croisant à angle droit la tangente au point d'intersection de la tangente avec le contour extérieur du boîtier.

13. Procédé selon l'une des revendications 8 à 12, **caractérisé en ce qu'**un signal de déclenchement est émis lorsque le niveau (15) à moitié atteint est reconnu ou la position de consigne de la fenêtre d'inspection (9) est adoptée.
